# EUROPÄISCHE PATENTSCHRIFT

(11) **EP 4 045 321 B1**
(45) Veröffentlichungstag und Bekanntmachung des Hinweises auf die Patenterteilung: **23.08.2023**
(21) Anmeldenummer: 20792397.0
(22) Anmeldetag: 14.10.2020
(51) Int. Cl.: B32B 37/00, B29C 48/08, B29C 65/00, B32B 27/36, B32B 37/15, C08J 5/18

(54) **VERFAHREN UND FOLIENRECKANLAGE ZUR HERSTELLUNG SIEGELFÄHIGER BIAXIAL ORIENTIERTER POLYESTERBASIERTER FOLIE**
PROCESS AND FILM-DRAWING UNIT FOR PRODUCING SEALABLE BIAXIALLY ORIENTED POLYESTER-BASED FILM
PROCÉDÉ ET UNITÉ D'ÉTIRAGE DE FILM POUR PRODUIRE UN FILM À BASE DE POLYESTER À ORIENTATION BIAXIALE POUVANT ÊTRE SCELLÉ

(30) Priorität: 15.10.2019 DE 102019215880
(43) Veröffentlichungstag der Anmeldung: 24.08.2022
(73) Patentinhaber: Lindauer Dornier Gesellschaft mit beschränkter Haftung, 88131 Lindau (DE)
(72) Erfinder: RUTZ, Andreas, 88131 Lindau (DE); WOLFF, Michael, 88149 Nonnenhorn (DE); LIN, Shaofeng, 88131 Lindau (DE); KLIER, Wolfgang, 88131 Lindau (DE)
(86) Internationale Anmeldenummer: PCT/EP2020/078939
(87) Internationale Veröffentlichungsnummer: WO 2021/074240

(56) Entgegenhaltungen:
- EP-A1- 0 026 006
- EP-A1- 3 248 777
- EP-A2- 0 226 923
- WO-A1-02/059186
- GB-A- 2 024 715
- US-A1- 2013 323 446
- US-A1- 2014 065 431

## Beschreibung

Die Erfindung betrifft ein Verfahren und eine Folienreckanlage zur Herstellung siegelfähiger biaxal orientierter polyesterbasierter Folie.

Kunststofffolien haben ein breites Einsatzgebiet, welches sich auch in starkem Maße auf die Verpackung und Haltbarmachung von Lebensmitteln erstreckt. Eine wichtige Eigenschaft der dafür verwendeten Kunststofffolien ist dabei ihre Siegelfähigkeit. Unter Siegelfähigkeit wird die Fähigkeit der Folie verstanden, eine Verpackung während des Herstellungsprozesses auf einfache Weise durch Einbringen von Wärme zu verschließen. Die Siegelfähigkeit einer Folie kann dadurch erreicht werden, dass bereits während des Herstellungsprozesses die zum Verpacken und Verschließen verwendete Folie auf einer oder auf beiden Außenseiten ein siegelfähiges Polymer aufweist. Es ist bekannt, dass die Siegelschichten gemeinsam mit einer Hauptschicht oder Basisschicht koextrudiert werden. Bei Folien auf Polypropylenbasis (BOPP) ist dies für biaxial verstreckte Folien weitverbreitet.

Es ist aber auch alternativ dazu möglich und bekannt, eine siegelfähige Schicht nachträglich auf eine Folie off-line aufzutragen, was beispielsweise mittels einer Extrusionsbeschichtung oder einer Schmelzebeschichtung erfolgt. Dies ist bei biaxal verstreckten Folien auf Polyethylenterephthalat-Basis, d. h. polyesterbasiert, häufig der Fall. Ein derartiges Verfahren ist als Inline-Verfahren bei der Herstellung von biaxial verstreckten Folien zwar bekannt, ist jedoch nicht weit verbreitet.

Bei biaxial orientierten Polypropylenfolien ist es bekannt, eine Folie einseitig oder beidseitig mittels Koextrusion in der Gießwalzeneinheit mit einer entsprechenden Siegelschicht zu versehen. Bei Folien auf Polyethylenterephthalat-Basis (BOPET) liegt die Extrusionstemperatur häufig im Bereich von 270 bis 290° C, liegt also die Extrusionstemperatur höher als bei polypropylenbasierten Folien, für welche die Extrusionstemperatur typischerweise im Bereich von 220 bis 250° C liegt. Die höheren Extrusionstemperaturen bei der BOPET-Herstellung erschwert die Koextrusion von geeigneten Siegelschichten mit niedriger Siegelanspringtemperatur, da für diese in der Regel eine niedrigere Extrusionstemperatur wünschenswert ist. Wichtig beim Beschichten eines Substrates mit einer siegelfähigen Beschichtungsschicht ist, dass diese Schicht während der weiteren Verarbeitung nicht delaminiert. Eine Delamination darf auch nicht bei einer Inline-Beschichtung mit anschließender Verstreckung auftreten, obwohl dort die Grenzfläche zwischen beiden Schichten zusätzlich den Kräften während der Verstreckung ausgesetzt ist.

Wenn eine Siegelschicht auf ein Substrat aufgebracht werden soll, welche für die spätere Verarbeitung einschließlich dem Recken eine gute Haftung aufweisen soll, dann muss die Temperatur, mit welcher diese Siegelschicht aufgebracht wird, relativ hoch gewählt werden, damit eben eine gute Haftung mit dem Substrat erreicht wird. Je höher die Temperatur der Siegelschicht ist, umso besser wird die Haftung sein, umso höher ist auch der Wärmeeintrag in das Substrat, weshalb die Gefahr besteht, dass das Substrat auf eine Temperatur erwärmt wird, welche oberhalb seiner Kristallisationstemperatur liegt. Die Steuerung der Temperatur der einzelnen Schichten ist während des gesamten Herstellungsprozesses bzw. während der gesamten Herstellungsabschnitte vor allen Dingen dann von extremer Bedeutung, wenn die Haftung der Beschichtungsschicht auf dem Substrat nicht über chemische Eigenschaften der einzelnen Schichten erreicht werden soll, sondern vor allen Dingen über physikalische Eigenschaften.

Über unterschiedliche chemische Eigenschaften kann eine sehr gute Haftung erreicht werden, ohne dass die Temperaturverhältnisse so kritisch sind, wie für den Fall, dass man mit Monomaterialien arbeiten möchte. Letzteres ist vor allen Dingen aus ökologischer Sicht von Bedeutung, da eine Wiederaufbereitung einer Folie, welche auch als Monomaterial bezeichnet wird, prinzipiell möglich ist, wohingegen ein Folienverbund aus Folien unterschiedlicher chemischer Eigenschaften für ein späteres Recycling weniger geeignet ist.

Damit bei einem inline-Beschichtungsprozess ein Überschreiten der Kristallisationstemperatur des Substrats ohne Weiteres nicht auftritt bzw. minimiert wird, ist es erforderlich, Kühlwalzen relativ großer Abmessungen im Verfahrensablauf vor allen Dingen an der Stelle vorzusehen, an welcher das Substrat mit einer siegelfähigen Schicht beschichtet wird.

Dagegen dient bei einem offline-Beschichtungsprozess das Kühlen der beschichteten Folie dem Abführen von Wärme aus der Folie, damit diese nach dem Beschichtungsprozess aufgewickelt werden kann.

In EP 1 362 075 B1 sind ein Verfahren zur Herstellung von beschichteter Polymerfolie und eine heißsiegelbare Polymerfolie beschrieben. Zwar ist in diesem Stand der Technik beschrieben, dass zwei Schichten zu einem Substrat koextrudiert werden und dass anschließend eine heißsiegelbare Schicht im Sinne einer Beschichtungsschicht auf das Substrat schmelzbeschichtet wird. Dieser Stand der Technik ist aber vor allem darauf gerichtet, durch unterschiedliche chemische Eigenschaften eine gute Haftfähigkeit zwischen der Beschichtungsschicht und dem Substrat zu erzielen. Das Einhalten bestimmter Temperaturverhältnisse zwischen dem Substrat und der Beschichtungsschicht ist nicht beschrieben. Durchgängig ist herausgestellt, dass die Folie gekühlt werden muss, und zwar das beschichtete Substrat, wobei die Kühlung beim Beschichten mit der heißsiegelbaren Beschichtungsschicht ebenfalls erfolgen muss. Bezüglich der Eigenschaften der Beschichtungsschicht und der auf einer Basisschicht vorgesehenen Zwischenschicht beschreibt dieser Stand der Technik, dass die Zwischenschicht bei einer Temperatur erweicht, welche geringer ist als die Schmelztemperatur der Basisschicht. Ein Temperaturmanagement zwischen der Beschichtungsschicht und der Zwischenschicht im Sinne eines Schonens der Basisschicht wird bei diesem Stand der Technik nicht angesprochen. So ist dieser Druckschrift keinerlei Hinweis auf einen Wärmeaustausch bzw. eine Energienutzung zwischen den einzelnen unterschiedlich warmen Schichten unter Beachtung von deren physikalischen Eigenschaften zu entnehmen.

Aus US 2013/323446 A1 ist ein Laminat bekannt, das mindestens drei Schichten bestehend aus Papier, Polyethylen und Polyethylenterephthalat umfasst, wobei das Polyethylenterephthalat direkt auf die Polyethylenoberfläche beschichtet ist, ohne dass eine Klebstoffschicht oder dergleichen dazwischen liegt. Die Polyethylenterephthalatschicht ist heißsiegelfähig. Ferner ist ein Verfahren zur Herstellung des Laminats beschrieben, bei dem mindestens eine Oberfläche eines Papiersubstrats mit Polyethylen beschichtet ist, wobei das Verfahren das Extrusionslaminieren von Polyethylenterephthalat auf eine Oberfläche des auf das Papiersubstrat auflaminierten Polyethylens umfasst. Ferner ist bekannt, eine Polyethylenterephthalatschicht zu verwenden, die bereits gereckt wurde.

US 2014/065431 A1 offenbart eine mehrschichtige Folie, die als siegelbare oder peelfähige Folie geeignet ist und speziell zum Verschließen von Lebensmittelbehältern geeignet ist. Diese Mehrschichtfolie umfasst eine polymere Substratschicht und eine Siegel- oder Peel-Siegelschicht. Die Mehrschichtverbundfolie besteht aus mindestens zwei Hauptschichten, und zwar aus einer polymeren Substratschicht für die mechanische Festigkeit und einer durch Extrusionsbeschichtung aufgebrachten heißsiegelfähigen Schicht.

EP 3 248 777 A1 betrifft eine transparente peelfähige Polyesterfolie als Basisschicht aufweisend eine biaxial orientierte Polyesterfolie und eine darauf offline beschichtete heißsiegelbare peelfähige Deckschicht.

GB 2 024 715 A offenbart ein Verfahren zum Herstellen einer Folie aus zwei Schichten desselben polyolefinischen Materials, wobei folgende Arbeitsschritte durchgeführt werden: die Extrusion einer Basisfolie, deren Abkühlung und Längsstreckung unter definierten Bedingungen, die Extrusion einer relativ dünnen Beschichtung aus demselben polyolefinischen Material auf die Basisfolie und die anschließende Querreckung der Verbundfolie unter definierten Bedingungen.

Aus EP 0 026 006 A1 ist ein laminiertes Material bekannt, dessen Hauptschicht aus einem Polyestermaterial besteht, das sehr gute Zugfestigkeitseigenschaften aufweist. Ferner ist eine Dichtungsschicht auf die genannte Hauptschicht aus einem modifizierten Polyestermaterial laminiert, wie es unter dem Handelsnamen PETG vermarktet wird, und die ihre Dichtungseigenschaften beibehält, obwohl das laminierte Material einer gemeinsamen Verstreckung unterzogen wird.

In EP 0 226 923 A2 ist ein Verfahren zur Herstellung von oberflächenausgerüsteten, wenigstens monoaxial gereckten, thermoplastischen Folien beschrieben. Vor wenigstens einer Reckstufe wird die Oberflächenausrüstung mit Hilfe von Schlitzrakelsystemen vorgenommen und die nachfolgende Reckung wird oberflächenberührungsfrei durchführt.

WO 02/059186 A1 offenbart ein Verfahren zur Herstellung einer heißsiegelbaren Polymerfolie, insbesondere einer heißsiegelbaren, abziehbaren Polymerfolie, mit folgenden Schritten: Schmelzextrudieren einer Substratschicht aus polymerem Material; Recken der Substratschicht in einer ersten Richtung; optionales Recken der Substratschicht in einer zweiten, orthogonalen Richtung; optionales Thermofixieren der gereckten Folie; Bilden einer heißsiegelbaren Schicht direkt auf einer Oberfläche des Substrats durch Schmelzbeschichten eines geschmolzenen polymeren Materials und Kühlen des beschichteten Substrats.

Demgegenüber besteht die Aufgabe der Erfindung darin, die Herstellung einer mit einer siegelfähigen Schicht versehenen Folie durch eine Optimierung der Wärmeübertragung zwischen den einzelnen zu verbindenden Schichten der Folie energetisch zu verbessern, sodass die Zufuhr von Energie an die jeweiligen einzelnen Schichten verbessert wird, weiterhin die durch die Beschichtungsschicht in die Folie eingebrachte Wärme zum Aufheizen der Folie aktiv zu nutzen und eine hochqualitative Folie einschließlich verbesserter optischer Eigenschaften und geringerem Energieverbrauch zu schaffen sowie die Folie mit relativ geringem Aufwand recyclebar zu machen.

Diese Aufgabe wird durch ein Verfahren mit den Merkmalen gemäß Anspruch 1 sowie durch eine Folienreckanlage mit den Merkmalen gemäß Anspruch 9 gelöst. Zweckmäßige Weiterbildungen sind in den jeweiligen abhängigen Ansprüchen enthalten.

Erfindungsgemäß weist das Verfahren zur Herstellung siegelfähiger biaxial orientierter polyesterbasierter Folie, welche in einer ersten Richtung und in einer zu in einer ersten Richtung senkrecht verlaufenden zweiten Richtung gereckt wird, ein Temperaturmanagement auf, bei welchem die Temperaturen der zu verbindenden einzelnen Schichten der Folie so aufeinander abgestimmt sind, dass die physikalischen Eigenschaften beim Verbinden der einzelnen Schichten untereinander so ausgewählt werden, dass nicht nur eine gute Haftfähigkeit erreicht wird, sondern dass auch eine hohe Siegelfähigkeit der bei der Folie außen liegenden Schicht erreicht wird, und während des Verbindungsprozesses von siegelfähiger Schicht mit dem Substrat auch bei zweischichtigem Substrat die Basisschicht des Substrates nicht soweit erwärmt wird, dass sie durch Erreichen der Kristallisationstemperatur eine Schädigung erfährt. Erfindungsgemäß wird eine erste Schicht und eine zweite Schicht für ein Substrat schmelzextrudiert, wobei die erste Schicht eine Basisschicht und die zweite Schicht eine Zwischenschicht darstellt und Basisschicht und Zwischenschicht koextrudiert werden, so dass sie nach dem Extrudieren zu einem Substrat miteinander verbunden sind. Prozesstechnisch danach erfolgt ein Aufbringen einer Heißsiegelbeschichtungsschicht auf das Substrat mittels Schmelzebeschichten. Bei diesem Schmelzebeschichten wird die die siegelfähige Schicht darstellende Beschichtungsschicht aus einer Düse extrudiert und dem Substrat zugeführt, mit welchem sie eine gute Haftung eingehen soll. Das erfindungsgemäße Verfahren ist auf polyesterbasierte Folie gerichtet, d. h. die unterschiedlichen Schichten sind Polyester oder Copolyester, so dass von vornherein ein sogenanntes Monomaterial, welches auch als Monopolyestermaterial bezeichnet wird, eine gute Recyclingfähigkeit ermöglicht, und zwar im Gegensatz zu aus der üblichen Praxis bekannten, aus unterschiedlichen Polymermaterialien bestehenden Folien. Im Rahmen dieser Erfindung ist unter einem Monomaterial oder Monopolyestermaterial ein Material zu verstehen, welches überwiegend, d. h. > 90 %, aus Polyestern und Copolyestern besteht und welches weiterhin keine damit inkompatiblen Materialien aus anderen Polymergruppen enthält. Dadurch, dass gemäß der Erfindung im Wesentlichen nur eine Gruppe von Polymeren, nämlich Polyester, verwendet wird, ist eine Recyclingfähigkeit gewährleistet.

Gemäß dem erfindungsgemäßen Verfahren wirkt die Beschichtungsschicht mit einer solchen Temperatur auf die Zwischenschicht ein, welche über dem Schmelzpunkt oder dem Erweichungspunkt der Zwischenschicht liegt, dass bezüglich einer Kontaktstelle, welche theoretisch eine Kontaktlinie ist, die Beschichtungsschicht auf das Substrat und damit auf die Zwischenschicht so einwirkt und die Zwischenschicht so ausgebildet ist, dass die Temperatur der Basisschicht des Substrats unter ihrer Kristallisationstemperatur liegt. Die Wärmezufuhr von der Beschichtungsschicht an die Zwischenschicht erniedrigt dabei deren Viskosität bis zur verschmelzenden Haftung mit der Beschichtungsschicht, ohne dass die Basisschicht eine Schädigung durch Überschreiten ihrer Kristallisationstemperatur erfährt. Unter verschmelzend wird hier ein verschweißartiges Haften beider Schichten aneinander bzw. deren verschweißartiges Verbinden miteinander verstanden. Vor allen Dingen, wenn diese Schädigung der Basisschicht des Substrats vermieden wird, ist das an der Folie durchzuführende Querrecken nach dem Erwärmen der mit der Beschichtungsschicht beschichteten Folie von einem über eine zeitlich geregelte Wärmezufuhr entsprechenden Temperaturniveau aus möglich. Durch das auf die physikalischen Verhältnisse der jeweiligen Schichten der Folie abgestellte Herstellungsverfahren, d. h. die Viskositäten zwischen der Zwischenschicht und der Beschichtungsschicht, wird mittels der vorliegenden Erfindung eine optimale Temperatur- und Energiezufuhr oder Energieabfuhr zu einer jeweiligen Schicht gewährleistet. Der Temperaturverlauf in der Maschine wird weitestgehend materialunabhängig beeinflusst, weil vorzugsweise die Folie mit ihren Schichten als Monomaterial wie Polyester und Copolyester aufgebaut ist. Ein derartiger Temperaturverlauf ist aber auch mit anderen Materialien der Folie möglich. Dabei wird die in das Substrat eingebrachte Wärmemenge so geregelt, dass bestimmte Grenzwerte nicht überschritten werden. Vorzugsweise wird aus Gründen der Recyclefähigkeit ein mehrschichtiges Monomaterial verwendet, worunter die Verwendung eines Materials aus polyesterbasiertem Kunststoff und copolyesterbasiertem Kunststoff fällt. Ein wesentlicher Vorteil gegenüber dem bekannten Verfahren und den bekannten Folien besteht darin, dass durch die erfindungsgemäße Verwendung von polyesterbasierten Folien die Folien dünner ausgeführt werden können, wodurch auch die Menge an Verpackungsabfall nach Benutzung durch den Endkonsumenten reduziert werden kann. Ein anderer wesentlicher Vorteil einer polyesterbasierten heißsiegelfähigen Folie besteht darin, dass diese als Monomaterial die Vorteile von PET hinsichtlich guter Verarbeitbarkeit auf Druck- und Converting-Maschinen mit der wichtigen Eigenschaft einer guten Siegelfähigkeit zum Verschließen von Verpackungen vereint. Da eben nur mit einem Grundmaterial gearbeitet wird, dessen einzelne Komponenten miteinander kompatibel sind, ist eine Recyclefähigkeit im Sinne eines hochwertigen werkstofflichen Recyclings gegeben.

Ein weiterer Vorteil besteht darin, dass neben der Optimierung der Wärmeübergangsverhältnisse zwischen der Basisschicht, der Zwischenschicht und der Beschichtungsschicht die optischen Eigenschaften der fertigen Folie verbessert werden. Die Wärmeübertragungsverhältnisse werden insbesondere zwischen der Beschichtungsschicht und der Zwischenschicht so optimiert, dass die Kristallisationstemperaturen der unter der Zwischenschicht liegenden Basisschicht nicht überschritten werden, so dass die optischen Eigenschaften der den wesentlichen Teil der Folie im Querschnitt darstellenden Folie ebenfalls verbessert werden.

Vorzugsweise wird die Folie, welche eine gegenüber der Basisschicht sehr dünne Zwischenschicht als nicht kristallisierbare Schicht aufweist, wenn überhaupt, dann nur so gering durch die Wärmebehandlung geschädigt, dass die optischen Eigenschaften der Folie nur vernachlässigbar beeinflusst werden. Unter nicht kristallisierbarer Schicht soll hier auch eine amorphe Schicht verstanden werden.

Weiter vorzugsweise weist die dünne Zwischenschicht eine Dicke von nur 5 bis 10 µm auf.

Um eine gute Haftfähigkeit, d. h. eine gute physikalische Verbindung zwischen der Beschichtungsschicht und der Zwischenschicht zu erreichen, wird die Beschichtungsschicht mit einer solchen Temperatur und über eine solche die Kontakttemperatur kontrollierende Einwirkungslänge an die Zwischenschicht angelegt, dass in dem der Beschichtungsschicht zugewandten Kontaktbereich deren Viskosität im Bereich von 0,5 bis 20000 Pa•s insbesondere, 1 bis 20000 Pa•s, insbesondere 1 bis 10000 Pa•s, liegt. Diese Viskositäten sind materialabhängig, gewährleisten aber eine gute Haftfähigkeit, wobei die Haftfähigkeit durch eine kontrollierte Einwirkungslänge der Beschichtungsschicht auf die Zwischenschicht gesteuert wird.

Gemäß einer Weiterbildung der Erfindung wird bei dem erfindungsgemäßen Verfahren die Dauer der Wärmezufuhr, welche von der Beschichtungsschicht an die Zwischenschicht erfolgt, durch Verändern einer Anschmieglänge des Substrats, welches mit der Beschichtungsschicht versehen werden soll, an einer temperierten Walze, insbesondere an einer Heiz-/Kühlwalze gesteuert. Es wird also vorzugsweise die Einwirkungslänge der Beschichtungsschicht auf die Zwischenschicht durch eine gesteuerte Einwirkungsdauer einer Heiz-/Kühlwalze auf die Beschichtungsschicht und damit auf die physikalischen Eigenschaften, insbesondere die Viskosität, der Beschichtungsschicht gesteuert bzw. kontrolliert verändert. Damit kann rein über die physikalischen Verhältnisse die Intensität der Haftung zwischen der Beschichtungsschicht und der Zwischenschicht gesteuert werden, wobei stets im Rahmen des Temperaturmanagements durch die Steuerung der Dauer der Wärmezufuhr oder Wärmeabfuhr zwar die gute Haftung erreicht werden kann, aber trotz der dünnen Ausbildung der Zwischenschicht, weil diese auch eine nicht-kristallisierbare Schicht ist, erreicht werden, dass der über die Zwischenschicht an die Basisschicht erfolgende Wärmeeintrag auf ein solches Maß reduziert und beeinflusst wird, dass die Basisschicht nicht in den Bereich oberhalb der Kristallisationstemperatur gelangt.

Gemäß einem weiteren Ausführungsbeispiel ist bei dem erfindungsgemäßen Verfahren vorgesehen, dass auf jeder Seite des Substrats je eine Beschichtungsschicht aufgebracht wird. Wenn eine weitere Beschichtungsschicht an der der ersten Beschichtungsschicht gegenüberliegenden Seite auf das Substrat aufgebracht wird, so können dafür neben dem Schmelzebeschichtungsverfahren ein Aufbringen der weiteren Beschichtungsschicht mittels bekannter Verfahren wie z. B. Gravurwalze oder mittels Mayer-Bar-Verfahren angewendet werden. Die Funktion dieser zusätzlichen Beschichtungsschicht kann beispielsweise in einer besseren Bedruckbarkeit bestehen. Des Weiteren führt diese weitere Schicht beispielsweise auch dazu, dass bei Verwendung eines gleichen oder ähnlichen Materials wie die auf der gegenüberliegenden Seite dazu angeordnete Beschichtungsschicht erreicht wird, dass die Folie dann beidseitig und mit sich selbst siegelfähig ist.

Gemäß einem weiteren Ausführungsbeispiel kann für das erfindungsgemäße Verfahren eine Dickenmessung des Substrats, welche nach dem Koextrudieren erfolgt, und eine Dickenmessung der Folie vor dem Abziehen vorgenommen werden. Die Dickenmessung kann vorzugsweise zusätzlich auch nach dem Schmelzebeschichten des Substrats mit der Beschichtungsschicht erfolgen.

Vorzugsweise wird das Schmelzebeschichten mit der Beschichtungsschicht vor der Längsrecke durchgeführt.

Gemäß einem zweiten Aspekt der Erfindung wird eine Folienreckanlage zur Herstellung siegelfähiger biaxial orientierter polyesterbasierter Folien bereitgestellt, welche in einer ersten Richtung und in einer zur ersten Richtung im Wesentlichen senkrecht angeordneten zweiten Richtung gereckt werden soll. Die erfindungsgemäße Folienreckanlage weist eine Gießwalzeneinheit auf, mittels welcher ein Substrat und eine Basisschicht koextrudierbar und miteinander verbindbar sind. Des Weiteren weist die Folienreckanlage eine Längsrecke auf, in welcher das aus Basisschicht und Zwischenschicht bestehende Substrat mittels eines Walzensystems längsreckbar ist. Zum Längsrecken müssen die Basisschicht und die Zwischenschicht so miteinander verbunden sein, dass ein Delaminieren der beiden Teile des Substrats nicht auftritt.

Nach der Längsrecke ist in der Folienreckanlage gemäß der Erfindung eine Düseneinrichtung vorgesehen, welche der Extrusion einer eine siegelfähige Schicht darstellenden Beschichtungsschicht dient. Diese Beschichtungsschicht geht nach einer definierten Kontaktlänge auf der Zwischenschicht mit dieser eine Schmelzverbindung ein, welche vorzugsweise eine dauerhafte Schmelzverbindung ist.

Die Düseneinrichtung weist ein zweites Walzensystem auf, welche das Substrat mit einer definierten Umschlingungslänge um temperierte Walzen des zweiten Walzensystems führt. Diese definierte Umschlingungslänge ist variabel und kann auf optimale Wärmeübertragung von der Beschichtungsschicht auf die Zwischenschicht geregelt und eingestellt werden. Dadurch ist die Dimensionierung der temperierten Walzen kleiner möglich, als das beim Stand der Technik möglich ist. Die temperierten Walzen weisen eine Übernahmewalze und eine Zuführwalze auf, wobei das Substrat von der Zuführwalze der Übernahmewalze zuführbar ist. Zwischen der Übernahmewalze und der diese berührenden Zuführwalze ist das Substrat zuführbar und wird in diesem Bereich mit der Beschichtungsschicht zusammengebracht, wobei die Umschlingungslänge des mit der Beschichtungsschicht versehenen Substrats steuerbar veränderbar ist, so dass entsprechend der Temperatur, mit der die Beschichtungsschicht dem Substrat zwischen der Übernahmewalze und der Zuführwalze zugeführt wird, die Menge an Wärmeeintrag in die Zwischenschicht definiert wird, so dass letztlich die gewünschte Temperatur der Beschichtungsschicht auch über ihre Umschlingungslänge eingestellt wird.

Zur erfindungsgemäßen Folienreckanlage gehört eine Querrecke, mit anschließendem dritten Walzensystem, wobei die Folie mittels des dritten Walzensystems von der Querrecke abziehbar und danach aufwickelbar ist.

Vorzugsweise ist die Umschlingungslänge der Folie an der jeweiligen Walze, welche die Basisschicht, die Zwischenschicht und die Beschichtungsschicht aufweist, durch eine schwenkbare Andrückwalze verlängerbar oder verkürzbar. Damit ist die Dauer der Einwirkung der Beschichtungsschicht mit ihrer Temperatur auf die an der Basisschicht angeordneten Zwischenschicht und damit die Viskosität der Zwischenschicht und damit die entsprechende Haftung und Verbindung zwischen Beschichtungsschicht und Zwischenschicht einstellbar veränderbar.

Vorzugsweise sind bei der erfindungsgemäßen Folienreckanlage die Düseneinrichtung und das zweite Walzensystem so relativ zueinander bewegbar, dass die extrudierte Beschichtungsschicht zunächst auf die Oberfläche der Übernahmewalze trifft und mit dieser dem an der Zuführwalze zugeführten Substrat zur Temperaturregelung und zur Steuerung des Wärmeübergangs von der Beschichtungsschicht an die Zwischenschicht entsprechend verbunden wird. Damit können die physikalischen Eigenschaften für eine optimale Haftung der Beschichtungsschicht an der Zwischenschicht und einer Vermeidung der Schädigung der Basisschicht durch unnötigen Wärmeeintrag in diese Basisschicht realisiert werden.

Gemäß einem weiteren Ausführungsbeispiel ist die Folienreckanlage mit zumindest einer Dickenmesseinrichtung versehen, welche die Dicke des Substrats nach dem Koextrudieren von Basisschicht und Zwischenschicht misst. Weiter vorzugsweise ist eine Dickenmesseinrichtung nach dem Verbinden und vor dem Abziehen vorgesehen, so dass auch nach dem Verbinden und dem Abziehen der Folie deren Dicke zuverlässig bestimmbar ist.

Weitere Vorteile und Details der Ausbildung des erfindungsgemäßen Verfahrens und der erfindungsgemäßen Folienreckanlage werden nun auf Basis von Ausführungsbeispielen anhand der nachfolgenden Zeichnung beschrieben. In der Zeichnung zeigen:
- Figur 1: eine vereinfachte Darstellung des prinzipiellen Aufbaus einer erfindungsgemäßen Folienreckanlage;
- Figur 2a): ein zweites Walzensystem zur Schmelzebeschichtung einer von einer Extrudierdüse zugeführten siegelfähigen Beschichtungsschicht mit größerer Umschlingungslänge;
- Figur 2b): ein zweites Walzensystem zur Schmelzebeschichtung einer von einer Extrudierdüse zugeführten siegelfähigen Beschichtungsschicht mit geringerer Umschlingungslänge;
- Figur 3a): das zweite Walzensystem gemäß Figur 2a) mit größerer Umschlingungslänge und Auftreffbereich der extrudierten Beschichtungsschicht auf der Übernahmewalze;
- Figur 3b): das zweite Walzensystem gemäß Figur 2b) mit Auftreffbereich der extrudierten Beschichtungsschicht auf der Übernahmewalze;
- Figur 4a): ein aus einer Basisschicht und einer Zwischenschicht koextrudiertes Substrat;
- Figur 4b): das gemäß Figur 4a) dargestellte Substrat mit siegelfähiger Beschichtungsschicht; und
- Figur 4c): das gemäß Figur 4b) dargestellte, mit siegelfähiger Beschichtungsschicht versehene Substrat mit zusätzlicher Beschichtungsschicht an dessen Unterseite.

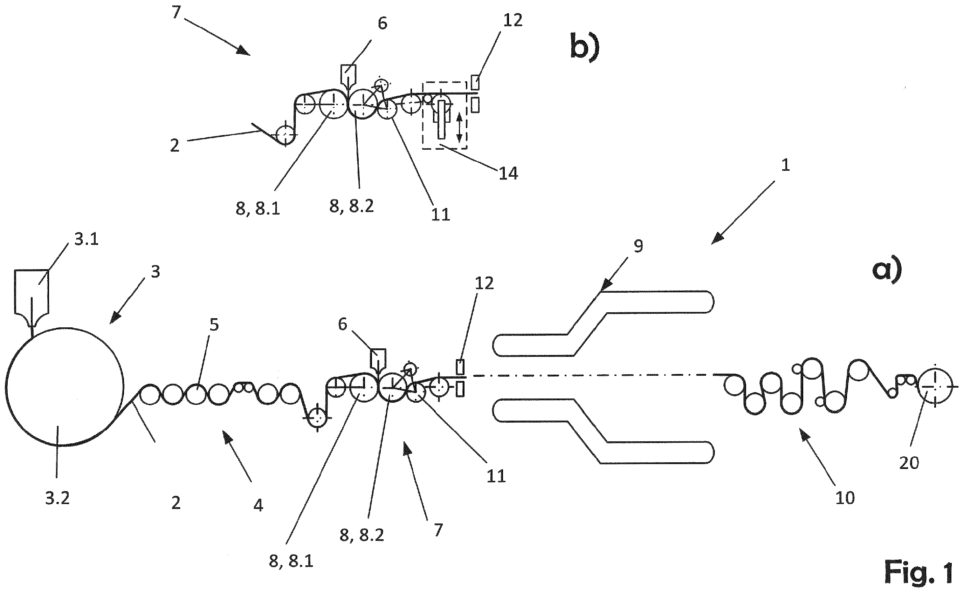

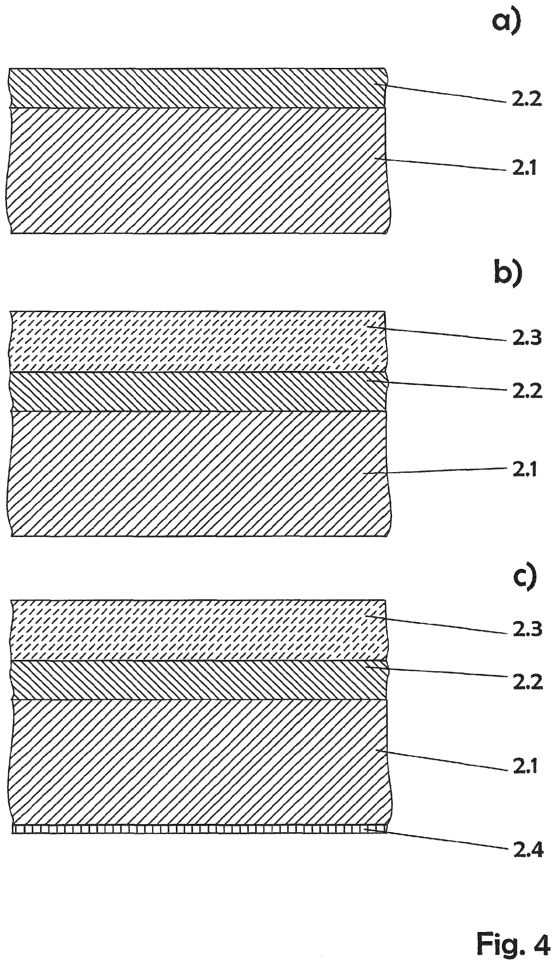

In Figur 1a) ist eine vereinfachte Darstellung des prinzipiellen Aufbau einer erfindungsgemäßen Folienreckanlage gezeigt, welche die jeweiligen technologischen Verfahrensschritte zeigt. Die Folienreckanlage 1 zur Herstellung einer siegelfähigen biaxial orientierten polyesterbasierten Folie 2 weist eine Gießwalzeneinheit 3 auf, welche eine Extrudierdüse 3.1 und eine Gießwalze 3.2 aufweist. Mittels der Gießwalzeneinheit 3 werden zwei Schichten eines Substrats der Folie 2, und zwar eine Basisschicht 2.1 und eine Zwischenschicht 2.2 (s. Figur 4a)), koextrudiert und dabei miteinander verbunden. Beim Koextrudieren werden die jeweiligen Kunststoffe der Basisschicht 2.1 und der Zwischenschicht 2.2 aufgeschmolzen, damit sie im aufgeschmolzenen Zustand miteinander verbunden werden können. Die Extrudierdüse 3.1 ist dabei so gestaltet, dass das Polymer der Basisschicht 2.1 und das der Zwischenschicht 2.2 zunächst in der Düse zusammengeführt werden und einem Düsenschlitz zugeführt und extrudiert werden, um anschließend auf der Gießwalze 3.2 abgekühlt zu werden. Dabei kommt es darauf an, dass die polyesterbasierte Basisschicht (PET) 2.1 relativ rasch gekühlt wird, da die Temperatur dieser Basisschicht 2.1 den kritischen Temperaturbereich durchläuft, in welchem eine Schädigung eintritt. Unter kritischem Temperaturbereich wird derjenige Temperaturbereich verstanden, bei welchem die Kristallisationstemperatur überschritten wird. Komplett vermeiden lässt sich bei einer derartigen Gießwalzeneinheit 3 eine gewisse Schädigung der Basisschicht 2.1 nicht. Damit die Schädigung möglichst klein gehalten werden kann, wird die extrudierte Schmelze für die erfindungsgemäß vorgesehenen biaxial gereckten PET-Folien unter großem Aufwand mit einer Kühlwalze großer Abmessung gekühlt. Durchmesser ≥ 2 m sind dabei üblich, damit der kritische Bereich für die Basisschicht 2.1 möglichst rasch durchlaufen und die Schädigung so gering wie möglich gehalten werden kann. Nach dem Verlassen der Gießwalze 3.2 sind die Basisschicht 2.1 und die nicht-kristallisierbare Zwischenschicht 2.2, weil sie beide im geschmolzenen Zustand zusammengeführt und extrudiert worden sind, miteinander verbunden. Das Substrat ist als zweischichtiges Substrat bestehend aus Basisschicht 2.1 und damit verbundener Zwischenschicht 2.2 ausgebildet und wird, von der Gießwalzeneinheit 3 kommend, einem ersten Walzensystem 4 zugeführt, welches als Längsrecke 5 ausgebildet ist. Die herzustellende biaxial orientierte Folie wird also zuerst in einer ersten Richtung, welche der Förderrichtung der Folie durch die Folienreckanlage entspricht, längsgereckt. Für dieses Längsrecken ist es erforderlich, dass die beiden Schichten des Substrats fest miteinander verbunden sind und keinerlei Delaminationsneigung zeigen.

Nach der Längsrecke 5 ist ein zweites Walzensystem 7 vorgesehen, bei welchem mittels einer Düseneinrichtung 6 eine siegelfähige Beschichtungsschicht 2.3 extrudiert und auf der Zwischenschicht 2.2 des aus Basisschicht 2.1 und der Zwischenschicht 2.2 bestehenden Substrats beschichtet bzw. aufgebracht wird. Bei diesem Schmelzebeschichten durchläuft die Basisschicht 2.1, anders als beim Koextrudieren mittels der Gießwalzeneinheit 3, nicht den kritischen Temperaturbereich, in welchem ihre Kristallisationstemperatur überschritten wird. Mittels der Energie der geschmolzenen Beschichtungsschicht 2.3 wird die Zwischenschicht 2.2 angeschmolzen bzw. erweicht, so dass nach dem Beschichten eine zuverlässige und gute Haftverbindung zwischen der Beschichtungsschicht 2.3 und der Zwischenschicht 2.2 des Substrats erreicht wird, so dass die siegelfähige Folie zumindest diese drei Schichten aufweist. In Abhängigkeit von Temperatur, Viskosität der Beschichtungsschicht 2.3 und der auf einer Übernahmewalze 8.2 vorhandenen bzw. eingestellten Umschlingungslänge des von einer Zuführwalze 8.1 gelieferten und mit der Beschichtungsschicht 2.3 zu versehenden Substrats kann der Grad der Aufschmelzung der Zwischenschicht 2.2 durch die schmelzextrudierte Beschichtungsschicht 2.3 materialabhängig gesteuert werden, ohne dass aktiv ein Kühlen erforderlich wäre.

Indem die schmelzextrudierte Beschichtungsschicht 2.3 auf die bezüglich ihrer Temperatur kühlere Zwischenschicht 2.2 auftrifft, wird einerseits die Zwischenschicht 2.2 an ihrer Oberseite aufgeschmolzen, andererseits kühlt sie auch die Beschichtungsschicht 2.3. Dadurch kann auf eine bauaufwendige große Kühlwalze, wie es bei der Gießwalzeneinheit 3 erforderlich ist, an dieser Stelle der Folienreckanlage 1 verzichtet werden. Die gesteuerten Wärmeübergangsverhältnisse zwischen der heißeren schmelzextrudierten Beschichtungsschicht 2.3 und der kühleren, mit der Basisschicht 2.1 zum Substrat verbundenen Zwischenschicht 2.2 schaffen ein einstellbares zuverlässiges Haftverbinden zwischen der Beschichtungsschicht 2.3 und der Zwischenschicht 2.2, und gleichzeitig verhindert die Zwischenschicht 2.2, dass die Basisschicht 2.1 auf eine Temperatur erwärmt wird, welche im Kristallisationsbereich liegt. Beim hier beschriebenen inline-Beschichten soll also die mittels der Schmelze der Beschichtungsschicht in die Folie eingebrachte Wärmeenergie in der Folie gehalten werden, um für das anschließende Querrecken deren Aufheizung zu erleichtern bzw. effizienter zu gestalten, weil das Aufheizen von einem höheren Energieniveau aus erfolgt. Der wünschenswerte Temperaturbereich nach erfolgter inline-Beschichtung liegt vorzugsweise bei 90°C bis 125°C. Dies ist die vorteilhafte Temperatur beim Querrecken. Je näher die Folie nach durchgeführter inline-Beschichtung an bzw. in diesem Bereich von 90°C bis 125°C liegt, desto weniger Energie muss in der Aufheizzone der Querrecke aufgebracht werden. Dies wird durch die erfindungsgemäße Anordnung und das erfindungsgemäße Steuern von Wärmeeintrag in die Zwischenschicht 2.2 einerseits und gleichzeitiger Kühlung der Beschichtungsschicht 2.3 durch die Zwischenschicht 2.2 andererseits erzielt. Der Kristallisationsbereich als kritischer Temperaturbereich liegt bei kristallisierbaren Polymeren zwischen Glasübergangstemperatur (etwa 70° C bei PET) und Schmelzpunkt (etwa 256° C bei PET). Der Kristallisationsbereich von PET liegt im Temperaturbereich von zwischen etwa 120° und 225° C.

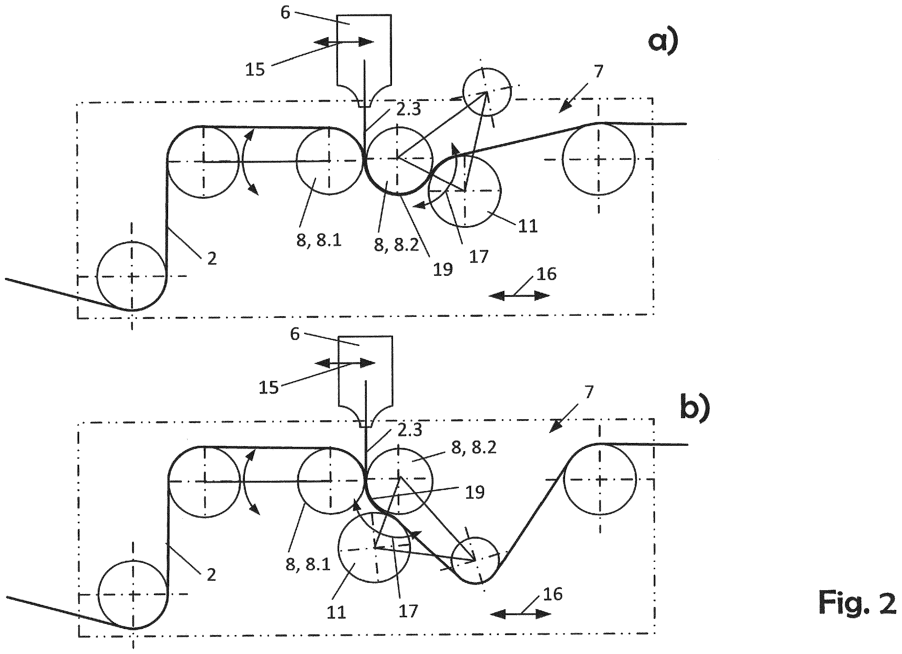

Bei dem beschriebenen Ausführungsbeispiel gemäß Figur 1a ist dargestellt, dass die Umschlingungslänge 19 (s. Figuren 2a), 2b), 3a) und 3b)) sich nahezu über die Hälfte der Walzenoberfläche der Übernahmewalze 8.2 erstreckt. Die schmelzextrudierte Beschichtungsschicht 2.3 wird von der Düseneinrichtung 6 in den Berührungsbereich zwischen der Zuführwalze 8.1 und der Übernahmewalze 8.2 geführt. Beide Walzen 8.1, 8.2 sind als temperierte Walzen 8 ausgebildet.

Am Ausgang des zweiten Walzensystems 7 ist vor dem Bereich der Querrecke 9 eine Dickenmesseinrichtung 12 vorgesehen, d. h. zwischen der Extrusionsbeschichtung von der Beschichtungsschicht 2.3 auf das Substrat und der Querrecke 9. Zusätzlich ist es auch möglich, noch die Dicke zwischen der Längsrecke 5 und der Extrusionsbeschichtung zu messen. Die Düseneinrichtung 6 für die Schmelzebeschichtung des Substrats mit der Beschichtungsschicht 2.3 wie auch die Extrudierdüse 3.1 der Gießwalzeneinheit 3 sind so ausgebildet, dass eine flexible und regelbare Düsenlippe eine gewünschte Schichtdickeneinstellbarkeit ermöglicht. Üblicherweise wird bei bekannten Anlagen nach der Querrecke 9 und vor dem Aufwickeln der mit der siegelfähigen Beschichtungsschicht 2.3 versehenen Folie die Dicke mittels einer weiteren Dickenmessstation (nicht gezeigt) gemessen. Die dafür verwendeten Methoden schließen beispielsweise eine Messung mittels einer radioaktiven Quelle, mittels Röntgenstrahlung oder mittels Infrarotstrahlung ein. Es ist auch bekannt, die Dicke in analoger Weise zwischen der Gießwalzeneinheit 3 und der Längsrecke 5 zu messen. Vor allem durch das Vorsehen einer Dickenmesseinrichtung zwischen der Extrusionsbeschichtung und der Querrecke 9 unter Verwendung von flexiblen und regelbaren Düsenlippen der beiden Düsen 3.1 und 6 ist es durch deren Kopplung möglich, dass eine gleichmäßige Dicke des Substrats und eine gleichmäßige Dicke der Beschichtungsschicht 2.3 auch noch nach der Querrecke 9 vorhanden ist. Dabei wird die Verringerung der Schichtdicke durch das Querrecken berücksichtigt, und auf Basis der Messergebnisse der Schichtdicke, welche mit der Dickenmesseinrichtung 12 gemessen wird, kann ein gewünschter Wert der Foliendicke bzw. sogar auch der Dicke der Beschichtungsschicht 2.3 auf der fertigen Folie geregelt bzw. eingestellt werden. Nach der Querrecke 9 ist ein drittes Walzensystem 10 vorgesehen, welches im Zusammenhang mit einem Wickler 20 den Abzug der nach dem Querrecken fertigfixierten Folie gewährleistet.

In Figur 1b) ist ein zweites Walzensystem 7 dargestellt, welches zu dem in Figur 1a) dargestellten Walzensystem 7 modifiziert ist. Zusätzlich ist bei dem modifizierten zweiten Walzensystem 7 gemäß Figur 1b) eine Aufbringvorrichtung 14 für eine zusätzliche Beschichtungsschicht 2.4 vorgesehen, welche ein Aufbringen einer Beschichtungsschicht auf der Unterseite der Folie, und zwar gegenüber der Oberseite der Folie, auf welcher an der Zwischensicht 2.2 die Beschichtungsschicht 2.3 aufgebracht worden ist. Diese Aufbringvorrichtung 14 für eine zusätzliche Beschichtungsschicht 2.4 kann beispielsweise dann vorgesehen werden, wenn eine heißsiegelfähige Folie benötigt wird, welche sowohl an der Oberseite als auch an der Unterseite heißsiegelfähig sein soll.

Mit der Einrichtung gemäß zweitem Walzensystem 7 kann erreicht werden, dass die siegelfähige Beschichtungsschicht 2.3 einstellbar und steuerbar so lange auf der Zwischenschicht 2.2 belassen wird, bis ein gutes Erweichen dieser Zwischenschicht für ein gutes Haften zwischen der Zwischenschicht 2.2 und der heißsiegelfähigen Beschichtungsschicht 2.3 erreicht werden kann. Das bedeutet, dass die Temperaturverhältnisse zwischen der Beschichtungsschicht 2.3 und der Zwischenschicht 2.2 geregelt bzw. beeinflusst bzw. ausgenutzt werden, und zwar dahingehend, dass die heißsiegelfähige Beschichtungsschicht 2.3 letztendlich durch die Zwischenschicht 2.2 gekühlt wird, sodass sogar auf ein Kühlen an dieser Stelle der Anlage verzichtet werden kann.

Die Verbindung von Beschichtungsschicht 2.3 und Zwischenschicht 2.2 auf Basis ihrer physikalischen Eigenschaften gewährleistet, dass die Basisschicht 2.1 während des Beschichtens des Substrats mit der Beschichtungsschicht 2.3 nicht ihre Kristallisationstemperatur erreicht oder gar überschreitet. Es ist nämlich die Beschichtungsschicht 2.3, welche die Zwischenschicht 2.2 erwärmt, damit eine gute Haftung zwischen diesen beiden Schichten auftritt. Jedoch ein Erwärmen der Basisschicht 2.1 wird soweit verhindert, dass diese nicht eine Temperatur in Höhe von oder über der Kristallisationstemperatur erreicht. Damit wird das für das Querrecken in der Querrecke 9 erforderliche anschließende Erwärmen von einem höheren Temperaturniveau aus durchgeführt, welches aber unterhalb der Kristallisationstemperatur liegt.

Das erfindungsgemäße Verfahren bzw. die erfindungsgemäße Folienreckanlage stellen also darauf ab, dass die physikalischen Eigenschaften der polyesterbasierten Schichten, wie z. B. ihre Viskositäten, zwischen der Zwischenschicht 2.2 und der Beschichtungsschicht 2.3 ausgenutzt werden, um eine gute Verbindung zwischen der Beschichtungsschicht 2.3 und der Zwischenschicht 2.2 einerseits zu erreichen und andererseits eine Schädigung der Basisschicht 2.1 zu verhindern, indem mittels der Beschichtungsschicht 2.3 die Zwischenschicht 2.2 nur soweit aufgeheizt und dadurch die Beschichtungsschicht 2.3 durch die Zwischenschicht 2.2 soweit gekühlt wird, dass der Wärmeeintrag in die Basisschicht 2.1 nur dergestalt ist, dass die Basisschicht 2.1 nicht über ihre Kristallisationstemperatur erwärmt wird.

Mit einer genauen Regelung dieser Temperatur- und Wärmeübergangsverhältnisse ist es somit möglich, die Temperatur der Basisschicht 2.1 relativ genau auf eine Temperatur kurz unter der Kristallisationstemperatur anzuheben, sodass beim anschließenden Erwärmen von dem zuvor beschriebenen höheren Temperaturniveau aus die Folie erwärmt werden kann, sodass insgesamt eine Energieeinsparung möglich ist. Die Nutzung der physikalischen Verhältnisse zwischen den einzelnen Schichten bedeutet, dass weitestgehend materialunabhängig, weil eben die einzelnen Materialien der Schichten auf polyesterbasierter Grundlage ausgewählt sind, eine gute Recyclebarkeit möglich ist.

Figur 2a) und b) zeigen in vergrößerter Darstellung die Schmelzebeschichtungsverhältnisse gemäß dem Ausführungsbeispiel nach Figur 1a). In Figur 2a) ist dargestellt, wie von der Düseneinrichtung 6 die schmelzextrudierte Beschichtungsschicht 2.3 in den Berührungspunkt zwischen den temperierten Walzen 8 d. h. der Zuführwalze 8.1 und der Übernahmewalze 8.2, zugeführt wird. Gegebenenfalls ist die der Zuführwalze 8.1 vorgelagerte Walze schwenkbar angeordnet. Diese Schwenkbewegung ist durch einen Doppelpfeil gekennzeichnet. Das Substrat wird über zwei Walzen des zweiten Walzensystems 7 und der Zuführwalze 8.1 zu der Stelle des Zuführens der Beschichtungsschicht 2.3 im Wege des Schmelzextrudierens geführt, wobei die Umschlingungslänge 19 um die Übernahmewalze 8.2 knapp 180° umfasst. Mittels einer schwenkbaren Andrückwalze 11, deren Bewegung durch einen Doppelpfeil 17 gekennzeichnet ist, wird das Ende der Umschlingungslänge des mit der Beschichtungsschicht 2.3 beschichteten Substrats um die Übernahmewalze 8.2, festgelegt. Die Umschlingungslänge 19, welche in Figur 2a) beispielhaft dargestellt ist, umfasst circa 160° an der Übernahmewalze 8.2.

Demgegenüber ist die in Figur 2b) gezeigte Umschlingungslänge 19 bei ansonsten analog dargestelltem Aufbau dieses zweiten Walzensystems 7 sogar weniger als 90°. Eingezeichnet in den Figuren 2a) und b) sind die Doppelpfeile 15 und 16. Sie sollen zum Ausdruck bringen, dass es prinzipiell möglich ist, dass die Düseneinrichtung 6 und das zweite Walzensystem 7, das auf einer nicht gezeigten Aufständerung befestigt ist, relativ zueinander in Richtung der Doppelpfeile 15 und 16 bewegbar sind.

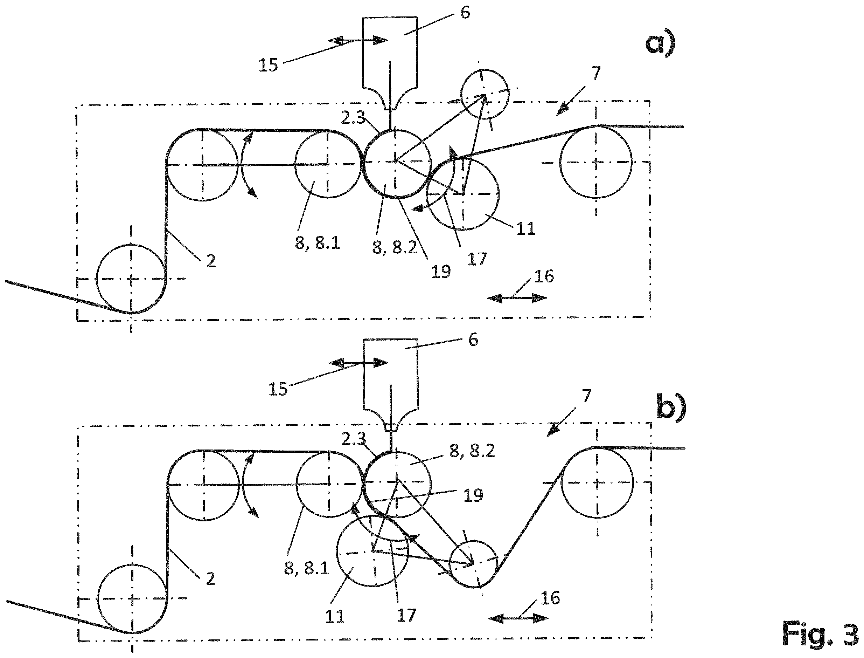

Diese Verhältnisse sind in den Figuren 3a) und b) dargestellt. In den beiden Figuren 3a) und b) ist die Düseneinrichtung 6 in Durchlaufrichtung der Folie durch die Folienreckanlage relativ nach hinten zur Oberfläche der Übernahmewalze 8.2 versetzt, d. h. weg von der Kontaktstelle zwischen der Zuführwalze 8.1 und der Übernahmewalze 8.2. Damit können über die Verweilzeit der Beschichtungsschicht 2.3 auf der temperierten Übernahmewalze 8.2 ihre Temperatur und damit auch ihre Viskosität zusätzlich eingestellt werden, sodass auch über diese Veränderung der Dauer der Einwirkung der Übernahmewalze 8.2 auf die Beschichtungsschicht 2.3 zusammen mit der Umschlingungslänge 19 insbesondere die Viskosität der Beschichtungsschicht 2.3 und der Zwischenschicht 2.2 verändert bzw. eingestellt bzw. geregelt werden kann. Analog zu Figur 2b) ist in Figur 3b) eine Andrückwalze 11 in Richtung auf die Einlaufseite der Übernahmewalze 8.2 geschwenkt, sodass die Umschlingungslänge 19 der Beschichtungsschicht 2.3 um die Übernahmewalze 8.2 entsprechend verringert ist. Die Grundfunktion und der Grundaufbau entsprechen insoweit dem in Figur 2 a) und b) bzw. in Figur 1 dargestellten.

Mittels des Walzensystems 7 in Verbindung mit einer Relativbewegung zwischen der Düseneinrichtung 6 und der Aufständerung des Walzensystems 7 bzw. des Walzensystems 7 bezüglich der Aufständerung kann eine Kühlung oder eine Vorheizung der Beschichtungsschicht 2.3 zeitlich- und temperaturmäßig eingestellt werden. Eine entsprechende Vorkühlung der Koextrusionsschicht als separate Vorkühlung ist möglich.

Figur 4 zeigt im Querschnitt in Figur 4a) ein Substrat, das aus einer Basisschicht 2.1 und einer Zwischenschicht 2.2 besteht, wobei die Zwischenschicht 2.2 mit der Basisschicht 2.1 durch den Vorgang des Koextrudierens in der Gießwalzeneinheit 3 erzeugt worden ist.

Figur 4b) zeigt die Beschichtung des Substrats gemäß Figur 4a) durch eine Beschichtungsschicht 2.3, welche im Bereich des zweiten Walzensystems 7 (siehe Figuren 2 und 3) gezeigt ist.

Schließlich ist in Figur 4c) dargestellt, dass gemäß einem weiteren Ausführungsbeispiel die in Figur 4b) dargestellte, mit einer heißsiegelfähigen Beschichtungsschicht 2.3 versehene Folie an der zur heißsiegelfähigen Schicht gegenüberliegenden Seite mit einer zusätzlichen Beschichtungsschicht 2.4 versehen ist. Eine solche zusätzliche Beschichtungsschicht 2.4 ist dann von Nutzen, wenn die Folie auf beiden Seiten eine heißsiegelfähige Beschichtungsschicht für bestimmte Einsatzzwecke aufweisen soll. Um dies zu realisieren, bedarf es am Ende des zweiten Walzensystems 7 der Anordnung einer Aufbringvorrichtung 14 für eine solche zusätzliche Beschichtungsschicht (siehe Figur 1b).

### Bezugszeichenliste

- 1: Folienreckanlage
- 2: Folie
- 2.1: Basisschicht
- 2.2: Zwischenschicht
- 2.3: Beschichtungsschicht
- 2.4: Zusätzliche Beschichtungsschicht
- 3: Gießwalzeneinheit
- 3.1: Extrudierdüse
- 3.2: Gießwalze
- 4.: Erstes Walzensystem
- 5: Längsrecke
- 6: Düseneinrichtung
- 7: Zweites Walzensystem
- 8: Temperierte Walzen
- 8.1: Zuführwalze
- 8.2: Übernahmewalze
- 9: Querrecke
- 10: Drittes Walzensystem
- 11: Andrückwalze
- 12: Dickenmesseinrichtung
- 14: Aufbringvorrichtung für zusätzliche Beschichtungsschicht
- 15: Seitliche Versatzbewegung Düse
- 16: Seitliche Versatzbewegung zweites Walzensystem
- 17: Schwenkbewegung Andrückwalze
- 19: Umschlingungslänge des beschichteten Substrats um die Übernahmewalze
- 20: Wickler

## Patentansprüche

1. Verfahren zur Herstellung siegelfähiger biaxial orientierter polyesterbasierter Monomaterialfolie (2), welche in einer ersten Richtung und in einer zur ersten Richtung senkrecht verlaufenden zweiten Richtung gereckt wird, und welches folgende Schritte umfasst:
a) Schmelzextrudieren eines zumindest eine erste und eine zweite Schicht aufweisenden Substrates, dessen erste Schicht eine Basisschicht (2.1) und dessen zweite Schicht eine nicht-kristallisierbare Zwischenschicht (2.2) ist, wobei die Basisschicht und die Zwischenschicht koextrudiert werden;
b) danach Aufbringen einer heißsiegelfähigen Beschichtungsschicht (2.3) auf das Substrat mittels Schmelzebeschichten;
c) Einwirken der Beschichtungsschicht (2.3) mit einer über dem Schmelzpunkt oder dem Erweichungspunkt der damit angeschmolzenen Zwischenschicht (2.2) liegenden Temperatur bezüglich einer Kontaktstelle auf die Zwischenschicht, indem die Dauer einer ersten Wärmezufuhr von der Beschichtungsschicht (2.3) an die Zwischenschicht (2.2) durch Verändern einer Anschmieglänge des Substrats an einer temperierten Walze (8) und der physikalischen Eigenschaften der Beschichtungsschicht (2.3) hinsichtlich einer Intensität der Haftung zwischen der Beschichtungsschicht (2.3) und der Zwischenschicht (2.2) gesteuert wird, wobei die über die Zwischenschicht (2.2) an die Basisschicht (2.1) erfolgende Wärmezufuhr auf ein solches Maß beeinflusst wird, dass die Temperatur der Basisschicht (2.1) des Substrats unter ihrer Kristallisationstemperatur liegt; und
d) Querrecken nach Erwärmen des mit der Beschichtungsschicht (2.3) beschichteten Substrats von einem über eine zeitlich geregelte zweite Wärmezufuhr entsprechenden erhöhten Temperaturniveau aus.

2. Verfahren nach Anspruch 1, bei welchem zumindest eine der physikalischen Eigenschaften die Viskosität der Beschichtungsschicht (2.3) ist.

3. Verfahren nach Anspruch 1 oder 2, bei welchem die Monomaterialfolie (2) ein mehrschichtiges, insbesondere polyesterbasiertes Monomaterial, aufweist.

4. Verfahren nach Anspruch 1 oder 2, bei welchem die Zwischenschicht (2.2) gegenüber der Basisschicht (2.3) sehr dünn ausgebildet ist.

5. Verfahren nach einem der Ansprüche 1 bis 4, bei welchem die Beschichtungsschicht (2.3) die Zwischenschicht (2.2) auf ihrer auf der Beschichtungsschicht (2.3) zugewandten Seite im Kontaktbereich auf eine solche Temperatur bringt, dass ihre Viskosität im Bereich von 0,5 bis 20000 Pa•s, insbesondere 1 bis 20000 Pa•s, insbesondere 1 bis 10000 Pa•s, liegt.

6. Verfahren nach einem der Ansprüche 1 bis 5, bei welchem auf jeder Seite des Substrats je eine Beschichtungsschicht (2.3, 2.4) aufgebracht wird.

7. Verfahren nach einem der Ansprüche 1 bis 6, bei welchem eine Dickenmessung des Substrats nach dem Koextrudieren und der Monomaterialfolie (2) vor dem Abziehen erfolgt.

8. Verfahren nach einem der Ansprüche 1 bis 7, bei welchem die Schmelzebeschichtung mit der Beschichtungsschicht (2.3) vor einer Längsrecke (5) erfolgt.

9. Folienreckanlage (1) zur Herstellung siegelfähiger biaxial orientierter polyesterbasierter, in einer ersten Richtung und in einer zur ersten Richtung senkrecht angeordneten zweiten Richtung zu reckender Monomaterialfolie (2), welche die folgenden Anlagenkomponenten aufweist:
a) eine Gießwalzeneinheit (3), welche als ein Substrat zumindest eine Basisschicht (2.1) und eine Zwischenschicht (2.2) koextrudiert und miteinander verbindet;
b) eine Längsrecke (5), in welcher das aus Basisschicht (2.1) und Zwischenschicht (2.2) bestehende Substrat mittels eines ersten Walzensystems (4) längsreckbar ist,
c) eine Düseneinrichtung (6) zur Extrusion einer eine siegelfähige Schicht darstellende Beschichtungsschicht (2.3), welche nach einer steuerbaren Kontaktlänge auf der Zwischenschicht (2.2) mit dieser eine Schmelzverbindung eingeht;
i) die Düseneinrichtung (6) wirkt mit dem zweiten Walzensystem (7) zusammen, welches das Substrat mit einer definierten Anschmieglänge um temperierte Walzen (8) führt;
ii) die temperierten Walzen (8) weisen eine Zuführwalze (8.1) und eine Übernahmewalze (8.2) auf, wobei das Substrat von der Zuführwalze (8.1) der Übernahmewalze (8.2) zuführbar ist;
iii) die Beschichtungsschicht (2.3) zwischen der Übernahmewalze (8.2) und der diese berührende Zuführwalze (8.1) dem Substrat zuführbar ist;
iv) die Anschmieglänge des mit der Beschichtungsschicht (2.3) versehenen Substrats steuerbar veränderbar ist, wobei physikalische Eigenschaften der Beschichtungsschicht für die Monomaterialfolie mittels der temperierten Walzen (8) und der Anschmieglänge um diese Walzen zur Einstellung von Haftung zwischen der Zwischenschicht (2.2) und der Beschichtungsschicht (2.3) steuerbar sind; und
d) eine Querrecke (9), von welcher die Monomaterialfolie (2) mittels eines dritten Walzensystems (10) abziehbar und aufwickelbar ist.

10. Folienreckanlage (1) nach Anspruch 9, bei welcher die Anschmieglänge der Monomaterialfolie (2), welche die Basisschicht (2.1), die Zwischenschicht (2.2) und die Beschichtungsschicht (2.3) aufweist, durch eine schwenkbare Andrückwalze (11) verlängerbar oder verkürzbar ist.

11. Folienreckanlage (1) nach Anspruch 9 oder 10, bei welcher die Düseneinrichtung (6) und das zweite Walzensystem (7) so relativ zueinander bewegbar sind, dass die extrudierte Beschichtungsschicht (2.3) zunächst auf die Oberfläche der Übernahmewalze (8.2) trifft und mit dieser dem an der Zuführwalze (8.1) zugeführten Substrat zur Temperaturregelung und Steuerung des Wärmeübergangs von der Beschichtungsschicht (2.3) an die Zwischenschicht (2.2) zuführbar ist.

12. Folienreckanlage (1) nach einem der Ansprüche 9 bis 11, bei welcher mittels einer Dickenmesseinrichtung die Dicke des Substrats nach dem Koextrudieren von der Basisschicht (2.1) und der Zwischenschicht (2.2) und ihrem Verbinden und der Monomaterialfolie (2) vor dem Abziehen messbar ist.

## Claims

1. A method for producing a sealable biaxially oriented polyester-based monomaterial film (2) which is stretched in a first direction and in a second direction perpendicular to the first direction, comprising the steps of:
a) melt extruding a substrate comprising at least a first and a second layer, the first layer of which is a base layer (2.1) and the second layer of which is a non-crystallisable intermediate layer (2.2), the base layer and the intermediate layer being coextruded;
b) then applying a heat-sealable coating layer (2.3) to the substrate by means of melt coating;
c) acting of the coating layer (2.3) with a temperature above the melting point or the softening point of the intermediate layer (2.2) melted therewith with respect to a contact region on the intermediate layer, in that the duration of a first heat supply from the coating layer (2.3) to the intermediate layer (2.2) is controlled by changing a contact length of the substrate on a tempered roller (8) and the physical properties of the coating layer (2.3) is controlled with respect to an intensity of adhesion between the coating layer (2.3) and the intermediate layer (2.2), the heat supply via the intermediate layer (2.2) to the base layer (2.1) being influenced to such an extent that the temperature of the base layer (2.1) of the substrate is below its crystallisation temperature; and
d) transverse stretching after heating the substrate coated with the coating layer (2.3) starting from an increased temperature level via a time-controlled second heat supply.

2. The method according to claim 1, wherein at least one of the physical properties is the viscosity of the coating layer (2.3).

3. The method according to claim 1 or 2, wherein the monomaterial film (2) comprises a multilayer, in particular polyester-based monomaterial.

4. The method according to claim 1 or 2, wherein the intermediate layer (2.2) is very thin compared to the base layer (2.3).

5. The method according to any one of claims 1 to 4, wherein the coating layer (2.3) brings the intermediate layer (2.2) on its side facing the coating layer (2.3) in the contact region to a temperature such that its viscosity is in the range from 0.5 to 20000 Pa•s, in particular 1 to 20000 Pa•s, in particular 1 to 10000 Pa•s.

6. The method according to any one of claims 1 to 5, wherein a coating layer (2.3, 2.4) is applied to each side of the substrate.

7. The method according to any one of claims 1 to 6, wherein a thickness measurement of the substrate is carried out after coextrusion and of the monomaterial film (2) before stripping.

8. The method according to any one of claims 1 to 7, wherein the melt coating with the coating layer (2.3) takes place before a longitudinal stretch (5).

9. Film stretching line (1) for the production of sealable biaxially oriented polyester-based monomaterial film (2) to be stretched in a first direction and in a second direction arranged perpendicular to the first direction, which has the following line components:
a) a casting roller unit (3) which co-extrudes at least a base layer (2.1) and an intermediate layer (2.2) and connects them with each other as a substrate;
b) a longitudinal stretch (5), wherein the substrate consisting of base layer (2.1) and intermediate layer (2.2) is longitudinally stretchable by means of a first roller system (4);
c) a nozzle device (6) for the extrusion of a coating layer (2.3) constituting a sealable layer, which after a controllable contact length on the intermediate layer (2.2) enters into a fusion bond with the latter;
i) the nozzle device (6) interacts with the second roller system (7), which guides the substrate around tempered rollers (8) with a defined nestle length;
ii) the tempered rollers (8) have a feed roller (8.1) and a receiving roller (8.2), the substrate being able to be fed from the feed roller (8.1) to the receiving roller (8.2);
iii) the coating layer (2.3) can be fed to the substrate between the receiving roller (8.2) and the feed roller (8.1) in contact with it;
iv) the nestle length of the substrate provided with the coating layer (2.3) is controllably variable, physical properties of the coating layer for the monomaterial film being controllable by means of the tempered rollers (8) and the nestle length around these rollers for adjusting adhesion between the intermediate layer (2.2) and the coating layer (2.3); and
d) a transverse stretch (9) from which the monomaterial film (2) can be pulled off and wound up by means of a third roller system (10).

10. Film stretching line (1) according to claim 9, wherein the nestle length of the monomaterial film (2), which comprises the base layer (2.1), the intermediate layer (2.2) and the coating layer (2.3), can be extended or shortened by a pivotable pressure roller (11).

11. Film stretching line (1) according to claim 9 or 10, wherein the nozzle device (6) and the second roller system (7) are movable relative to each other in such a way that the extruded coating layer (2.3) first meets the surface of the receiving roller (8.2) and can be fed with it to the substrate supplied at the feed roller (8.1) for temperature regulation and control of the heat transfer from the coating layer (2.3) to the intermediate layer (2.2).

12. Film stretching line (1) according to any one of claims 9 to 11, wherein the thickness of the substrate after the co-extrusion of the base layer (2.1) and the intermediate layer (2.2) and their bonding and the monomaterial film (2) prior to drawing off can be measured by means of a thickness measuring device.

## Revendications

1. Procédé de fabrication d'un film mono-matériau (2) à base de polyester, orienté biaxialement, soudable, qui est étiré dans une première direction et dans une deuxième direction perpendiculaire à la première direction, et qui comprend les étapes suivantes :
a) l'extrusion à l'état fondu d'un substrat présentant au moins une première et une deuxième couche, dont la première couche est une couche de base (2.1) et dont la deuxième couche est une couche intermédiaire non cristallisable (2.2), la couche de base et la couche intermédiaire étant coextrudées ;
b) ensuite, l'application d'une couche de revêtement thermosoudable (2.3) sur le substrat au moyen d'un revêtement à l'état fondu ;
c) l'action de la couche de revêtement (2.3) sur la couche intermédiaire avec une température supérieure au point de fusion ou au point de ramollissement de la couche intermédiaire (2.2) ainsi fondue, par rapport à un point de contact, en contrôlant la durée d'un premier apport de chaleur de la couche de revêtement (2.3) à la couche intermédiaire (2.2) par modification d'une longueur de conformation du substrat sur un rouleau conditionné en température (8) et des propriétés physiques de la couche de revêtement (2.3) en ce qui concerne une intensité de l'adhésion entre la couche de revêtement (2.3) et la couche intermédiaire (2.2), l'apport de chaleur à la couche de base (2.1) par l'intermédiaire de la couche intermédiaire (2.2) étant influencé dans une mesure telle que la température de la couche de base (2.1) du substrat est inférieure à sa température de cristallisation ; et
d) l'étirage transversal après le chauffage du substrat revêtu avec la couche de revêtement (2.3) à partir d'un niveau de température élevé correspondant par un deuxième apport de chaleur réglé dans le temps.

2. Procédé selon la revendication 1, dans lequel au moins l'une des propriétés physiques est la viscosité de la couche de revêtement (2.3).

3. Procédé selon la revendication 1 ou 2, dans lequel le film mono-matériau (2) présente un mono-matériau multicouche, notamment à base de polyester.

4. Procédé selon la revendication 1 ou 2, dans lequel la couche intermédiaire (2.2) est configurée sous forme très mince par rapport à la couche de base (2.3).

5. Procédé selon l'une quelconque des revendications 1 à 4, dans lequel la couche de revêtement (2.3) porte la couche intermédiaire (2.2), sur son côté tourné vers la couche de revêtement (2.3), dans la zone de contact, à une température telle que sa viscosité se situe dans la plage allant de 0,5 à 20 000 Pa·s, notamment de 1 à 20 000 Pa·s, notamment de 1 à 10 000 Pa·s.

6. Procédé selon l'une quelconque des revendications 1 à 5, dans lequel une couche de revêtement (2.3, 2.4) est appliquée sur chaque côté du substrat.

7. Procédé selon l'une quelconque des revendications 1 à 6, dans lequel une mesure d'épaisseur du substrat est effectuée après la coextrusion et du film mono-matériau (2) avant le décollement.

8. Procédé selon l'une quelconque des revendications 1 à 7, dans lequel le revêtement à l'état fondu avec la couche de revêtement (2.3) est effectué avant un étirage longitudinal (5).

9. Installation d'étirage de film (1) pour la fabrication d'un film mono-matériau (2) à base de polyester, orienté biaxialement, soudable, à étirer dans une première direction et dans une deuxième direction agencée perpendiculairement à la première direction, qui présente les composants d'installation suivants :
a) une unité de rouleau de coulée (3) qui coextrude et relie entre elles, en tant que substrat, au moins une couche de base (2.1) et une couche intermédiaire (2.2) ;
b) un appareil d'étirage longitudinal (5) dans lequel le substrat constitué de la couche de base (2.1) et de la couche intermédiaire (2.2) peut être étiré longitudinalement au moyen d'un premier système de rouleaux (4),
c) un dispositif de buse (6) pour l'extrusion d'une couche de revêtement (2.3) constituant une couche soudable, qui, après une longueur de contact contrôlable sur la couche intermédiaire (2.2), forme avec celle-ci une liaison par fusion ;
i) le dispositif de buse (6) coopère avec le deuxième système de rouleaux (7) qui fait passer le substrat autour de rouleaux conditionnés en température (8) avec une longueur de conformation définie ;
ii) les rouleaux conditionnés en température (8) présentent un rouleau d'amenée (8.1) et un rouleau de transfert (8.2), le substrat pouvant être amené du rouleau d'amenée (8.1) au rouleau de transfert (8.2) ;
iii) la couche de revêtement (2.3) peut être amenée au substrat entre le rouleau de transfert (8.2) et le rouleau d'amenée (8.1) qui le touche ;
iv) la longueur de conformation du substrat pourvu de la couche de revêtement (2.3) peut être modifiée de manière contrôlable, les propriétés physiques de la couche de revêtement pour le film mono-matériau pouvant être contrôlées au moyen des rouleaux conditionnés en température (8) et de la longueur de conformation autour de ces rouleaux pour ajuster l'adhérence entre la couche intermédiaire (2.2) et la couche de revêtement (2.3) ; et
d) un appareil d'étirage transversal (9), par lequel le film mono-matériau (2) peut être décollé et enroulé au moyen d'un troisième système de rouleau (10).

10. Installation d'étirage de film (1) selon la revendication 9, dans laquelle la longueur de conformation du film mono-matériau (2), qui présente la couche de base (2.1), la couche intermédiaire (2.2) et la couche de revêtement (2.3), peut être prolongée ou raccourcie par un rouleau de pression pivotant (11).

11. Installation d'étirage de film (1) selon la revendication 9 ou 10, dans laquelle le dispositif de buse (6) et le deuxième système de rouleaux (7) sont mobiles l'un par rapport à l'autre de telle sorte que la couche de revêtement extrudée (2.3) rencontre d'abord la surface du rouleau de transfert (8.2) et peut être amenée avec celui-ci au substrat amené sur le rouleau d'amenée (8.1) pour la régulation de la température et le contrôle du transfert de chaleur de la couche de revêtement (2.3) à la couche intermédiaire (2.2).

12. Installation d'étirage de film (1) selon l'une quelconque des revendications 9 à 11, dans laquelle l'épaisseur du substrat peut être mesurée au moyen d'un dispositif de mesure d'épaisseur après la coextrusion de la couche de base (2.1) et de la couche intermédiaire (2.2) et leur liaison et du film mono-matériau (2) avant le décollement.
